# EUROPEAN PATENT SPECIFICATION

(11) **EP 0 438 298 B1**
(45) Date of publication and mention of the grant of the patent: **17.03.1999**
(21) Application number: 91300337.2
(22) Date of filing: 17.01.1991
(51) Int. Cl.: G06F 15/02, G06T 1/00

(54) **Information processing apparatus having means for registering image data**
Datenverarbeitungsanordnung mit Registrierung von Bilddaten
Appareil de traitement d'informations avec des moyens pour enregistrer des données d'images

(30) Priority: 19.01.1990 JP 9627/90
(43) Date of publication of application: 24.07.1991
(73) Proprietor: SONY CORPORATION, Tokyo 141 (JP)
(72) Inventor: Hirayama, Tomoshi, c/o Patent Division, Shinagawa-ku, Tokyo 141 (JP)
(74) Representative: Cotter, Ivan John

(56) References cited:
- EP-A- 0 271 280
- EP-A- 0 379 336
- WO-A-89/01658

## Description

This invention relates to information processing apparatus.

WO 89/01658 discloses an electronic personal organiser with a display providing graphics representations of a conventional personal organiser and having a translucent Indium Tin Oxide graphics tablet overlying the display for entering information.

EP-A-0 271 280 discloses a system having a personal computer connected to a display and a touch screen panel or tablet. The system provides a form entry system in which predefined forms for entering routine data are displayed, and the data entered using the panel. A user is prompted to complete a field on a form and a tool used to complete the field is displayed. One of the forms has an area for free-hand writing of information. In an example, the forms have a field for entering the name of a customer, and the tool for entering the name is an image of a keyboard with a name display therein. Once the tool has been used, a key on the tool is manually actuated to transfer the name to the field. Subsequent forms automatically include the customers name.

In a known computer (hereinafter simply referred to as a central processing unit (CPU)), a program is generally utilized in which many data in a memory are stored in the form of a plurality of pages or in the form of a plurality of cards. In the program in which data are stored in the form of pages, predetermined data are collected in a unit of pages, whereas in the program in which data are stored in the form of cards, cards indicating one data section are stored randomly. In the following description, data formed in a unit of pages and in a unit of cards are treated together as a plurality of data formed at every page. In the data formed in a unit of pages, such as a notebook or the like, an owner's name column, an address column and so on are provided at the end of the notebook, and the owner's name and so on are written in these columns.

When the data formed in a unit of pages or in a unit of cards are considered, there are then disadvantages that the owner's name, the recording date or the print-out date of one of the pages or cards sorted at every page or at every card cannot be known. Particularly, while the writer of hand-written data can be known from the form of the writing, the writer of data written with a word processor cannot be determined in this way. Even when the writer writes data by hand if such hand-written data are displayed or recorded as printing type data, then the writer cannot be determined easily.

According to the present invention there is provided an information processing apparatus comprising: data input means comprising a tablet for inputting information by a user; memory means for storing said information input by said data input means; processing means for processing said information in the form of a plurality of pages; and displaying means for displaying said information page by page; means for registering image data representative of the name of the owner of information input by said data input means, the registration of the said name image data being executed on an individual registration area on one of said pages; characterised by: means for judging whether or not a predetermined process has been performed on one or more others of said pages; and means responsive to the judging means for storing said name image data at a predetermined position of the or each other of said pages when a said predetermined process has been performed on that page, wherein when that said page is displayed, said name image data are displayed with said information at the said predetermined position of that page.

The invention will now be described by way of example with reference to the accompanying drawings, throughout which like parts are referred to by like references, and in which:
Figure 1 is a flowchart of the operation of an embodiment of information processing apparatus according to the present invention;
Figure 2 (formed of Figures 2A and 2B) is another flowchart for the embodiment;
Figure 3 (formed of Figures 3A and 3B) is another flowchart for the embodiment;
Figures 4A to 4E are schematic diagrams of examples of picture screens, and to which references will be made in explaining operations of the embodiment;
Figure 5 is a front view illustrating the embodiment;
Figure 6 is a schematic block diagram showing an overall arrangement of the embodiment.

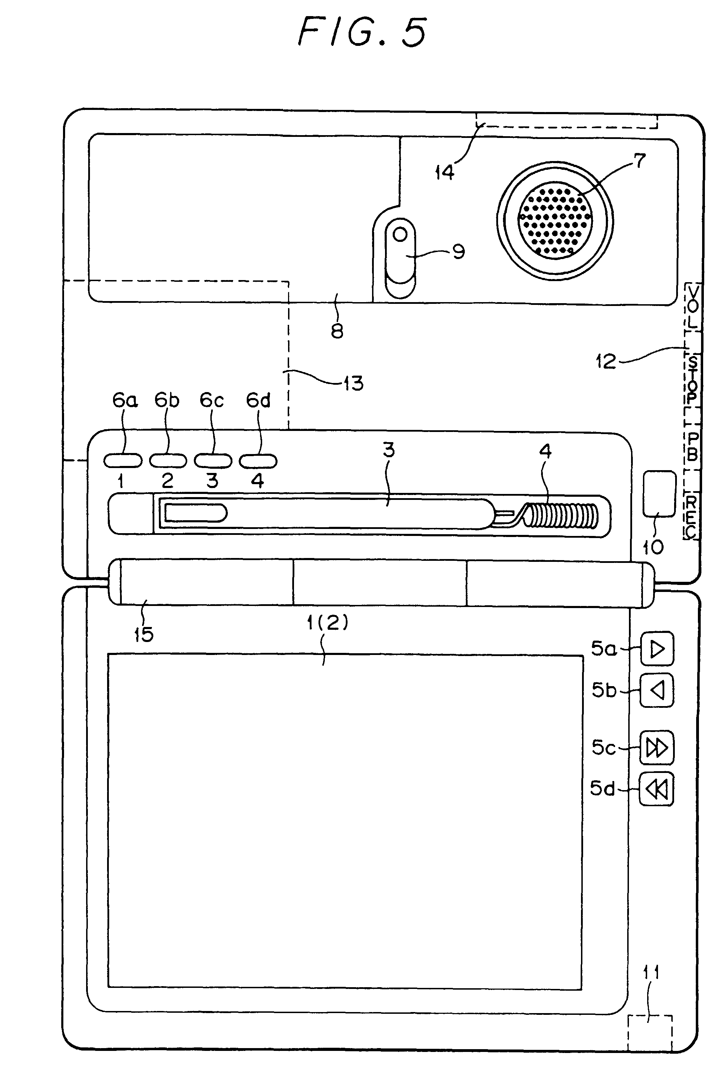

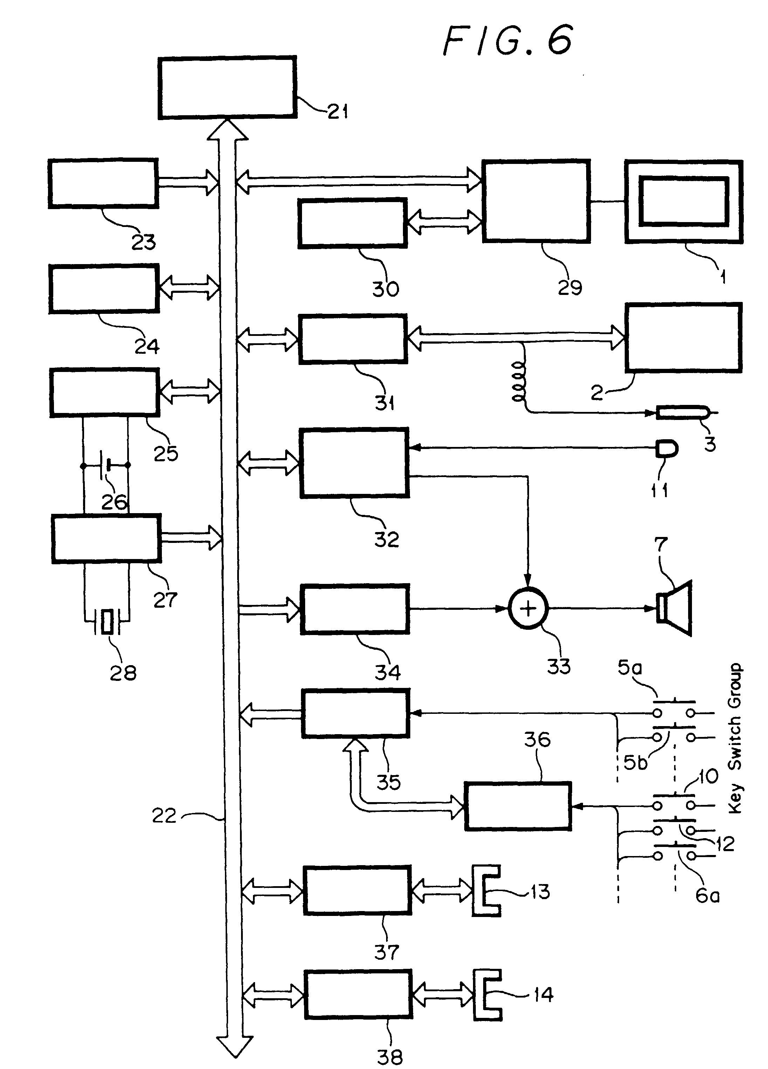

Firstly, an embodiment in which the information processing apparatus of the present invention is applied to a very small computer will be explained with reference to Figures 5 and 6.

Figure 5 shows a front view of the information processing apparatus, which comprises a display apparatus formed of a liquid crystal display (LCD) device or the like, that is, a display section 1. The display section 1 displays on a picture screen thereof video image data from a central processing unit (CPU) or the like which will be explained later. An input apparatus, that is, an input tablet 2 formed of a transparent touch sensor or the like is provided on the surface of the display section 1. A pen 3 is provided to input arbitrary data in cooperation with the input tablet 2. The CPU incorporates therein a detecting means for sensing the change of electrostatic capacity of the input tablet 2 and the pen 3 via the pen 3 so that, even when the point of the pen 3 is not in contact with the input tablet 2, its coordinates can be detected by the detecting means. Also, a cursor is displayed on the display section 1 at a position opposing the point of the pen 3. When the user picks up the pen 3 and touches the input tablet 2 with the point of the pen 3, then information such as their contact condition and contact position are supplied through a lead 4 to the CPU, so data can be input to the CPU. Key switches 5a, 5b, 5c and 5d, and 6a, 6b, 6c and 6d enable other signals to be supplied to the CPU.

The apparatus also includes a loudspeaker 7, and a battery compartment 8 in which a power source battery is accommodated under a lid which is made openable and/or closable by releasing a locking mechanism 9, and a power switch 10.

Broken lines in Figure 5 represent positions of devices provided on the side wall of the apparatus, and including a microphone 11 and an operation key group 12 which is used to perform a solid-state recording which will be referred to later. By operating the operation key group 12, an audio signal fed to the microphone 11 is recorded and is reproduced by the loudspeaker 7. A socket 13 is provided for an IC card such as a read only memory (ROM), and a random access memory (RAM), and an expansion socket 14 is provided to connect this apparatus to external apparatus.

A hinge 15 incorporates therein a flexible substrate through which a signal is transmitted. The hinge 15 enables the apparatus to be folded into two parts without interference to the electrical operation. The apparatus is about 29 cm long and about 20 cm wide in the unfolded state, and is about 4 cm thick in the folded state. The display section 1 is about 4 cm long and 10 cm wide.

In this apparatus, an arrangement of hardware incorporated therein is represented in Figure 6.

Referring to Figure 6, there is shown the CPU 21 to which various function ICs and so on are connected through a bus line 22. A ROM 23 is connected through the bus line 22 to the CPU 21, and in addition to a system program for controlling the entirety of the apparatus, a kana-kanji conversion program for word processing in Japanese, a dictionary table therefor, a hand-written input information recognition program, and a dictionary table therefor and so on are written in the ROM 23.

A RAM 24 forms a work area, and a back-up RAM 25 is connected to a power source 26. A timer IC 27 is driven by the power source 26, and counts clocks generated from a quartz oscillator 28 continuously to output data of date and time.

Connections between this hardware and respective sections in the front view of Figure 5 will now be explained with reference to Figure 6.

A display controller 29 controls the display section 1. The display controller 29 is controlled by the CPU 21 and display data derived by the CPU 21 are written in a video RAM (V-RAM) 30 through the display controller 29. Also, data written in the V-RAM 30 are supplied through the display controller 29 to the display section 1, thereby being displayed in a predetermined manner.

A tablet interface circuit 31 is provided for the input tablet 2 which is integrally formed with the display section 1 and the pen 3. By way of the interface circuit 31, data or the like written in the input tablet 2 are supplied to the CPU 21, in which it is processed in a predetermined manner.

A solid-state recording processing circuit 32 is provided to process an audio signal from the microphone 11 in a predetermined manner such as an analogue-to-digital (A/D) conversion or the like. The thus processed signal is stored in the back-up RAM 25 through the CPU 21. Audio data stored in the back-up RAM 25 are supplied to the recording processing circuit 32, in which they are processed in a predetermined manner such as a digital-to-analogue (D/A) conversion or the like, the thus processed signal being fed through a mixer 33 to the loudspeaker 7.

A dialler circuit 34 generates, when supplied with arbitrary data such as a telephone number or the like from the CPU 21, an acoustic signal corresponding to a dual tone signal corresponding to a telephone number or the like of a push-button telephone. This acoustic signal from the dialler circuit 34 is supplied through the mixer 33 to the loudspeaker 7.

A key interface circuit 35 receives directly or through a power source circuit 36 signals from a key switch group such as the key switches 5a to 5d, 6a to 6d, 10 and 12 or the like. From the key interface circuit 35, a signal converted in a predetermined manner is supplied to the CPU 21. Incidentally, the key switches 12, that is, other than the power switch 10, the key switches 6a to 6d and the stop button are connected through the power source circuit 36 to the key interface circuit 35. When these key switches are operated, the power source circuit 36 is driven first and then information indicative of the ON or OFF state of these key switches is supplied to the key interface circuit 35.

An IC card interface circuit 37 and an expansion interface circuit 38 are connected to the bus line 22, and to the sockets 13 and 14. The IC card interface circuit 37 is used to connect an IC card to the apparatus, and the expansion interface circuit 38 is used to connect this apparatus to external apparatus when the system of this information signal processing apparatus is expanded.

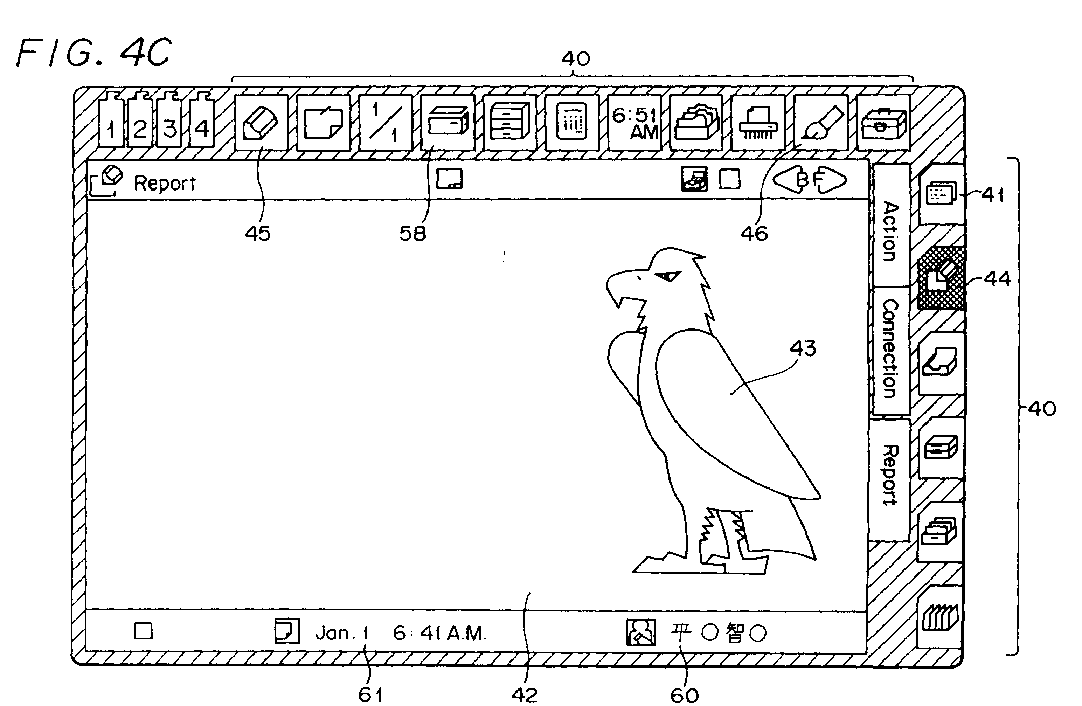

In the above-mentioned very small computer, when the power switch 10 shown in Figure 5 is depressed, then icon groups 40 which can effect various processes as shown in Figure 4C are displayed on the upper portion and right-hand side of the display section 1. If an icon 41 described as [see] of the icon groups 40 is touched with the point of the pen 3 and one of characters [action], [connection], [report] and so on displayed on the left side of the [see] icon 41, for example, [report] is touched with the point of the pen 3, a report picture 42 shown in Figure 4C is displayed on the display section 1. In this case, a picture of an eagle 43 drawn on the report picture 42 is a picture drawn, for example, on the first report page. The name 60 of who drew this picture is displayed on the end portion of this report page. Many pages are memorised in the memory as report data and stored therein. The pages of these report pictures are not provided with page numbers because it is very troublesome to re-write the page number when one report is stored. Moreover, the content of [report] is not limited to figures or the like and sentences and so on are written in the [report] in most cases. Of course, if a write icon 44 described as [write] is touched with the point of the pen 3, and of the icon groups 40 arrayed on the upper portion of the display section 1, a printing type icon 45 described as [printing type] or a figure icon 46 described as [figure] is touched with the point of the pen 3, a printing type plate or a figure plate is drawn into the report picture 42 and the printing type or the figure can be drawn on the report pictures 42. The icon [connection] is generally used to write or to check a telephone directory, an address book and so on, while [action] is used to write or to check a schedule table or the like, and respective pages of these various data are stored in the memory in the form of cards.

In this embodiment, together with the signature of the owner, or his sign or pen name, the time when the record, paging and so on are determined and displayed on the predetermined position of each card, for example, on the end portion at every data of the card.

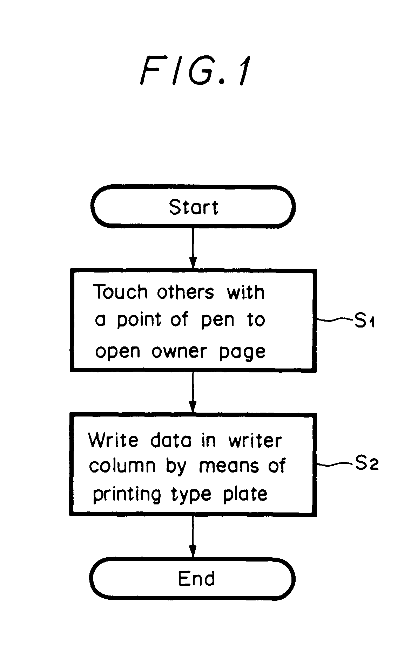

The embodiment of information processing apparatus according to the present invention will now be described with reference to Figures 1 to 4.

Figure 1 shows a flowchart to which references will be made in explaining a method in which a name is registered in the apparatus.

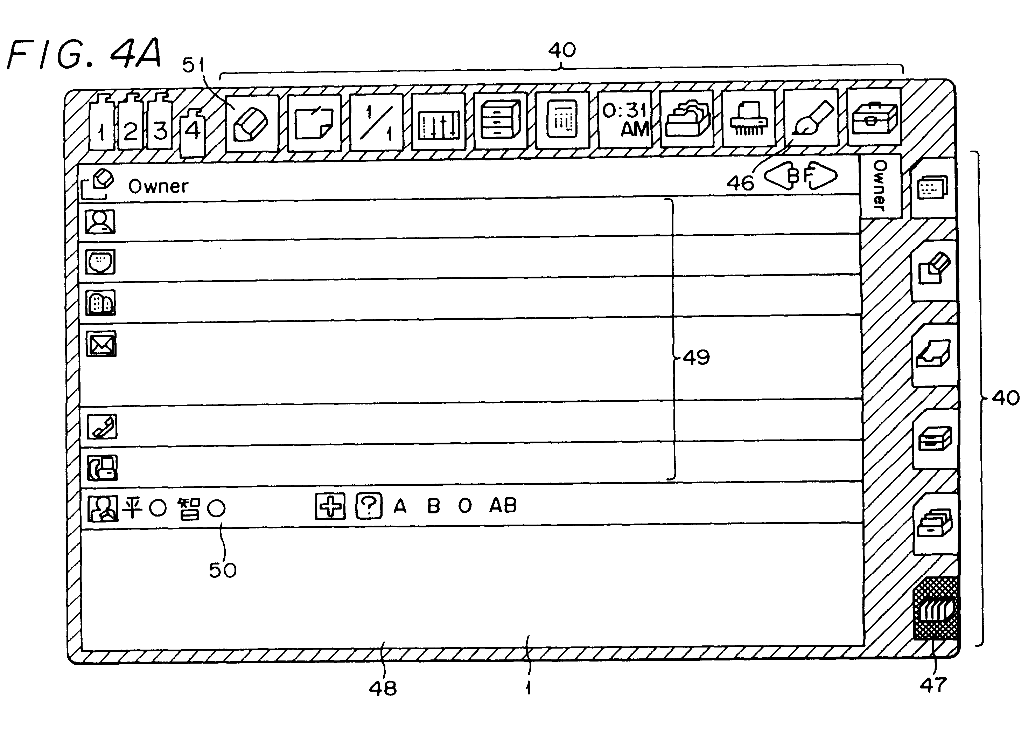

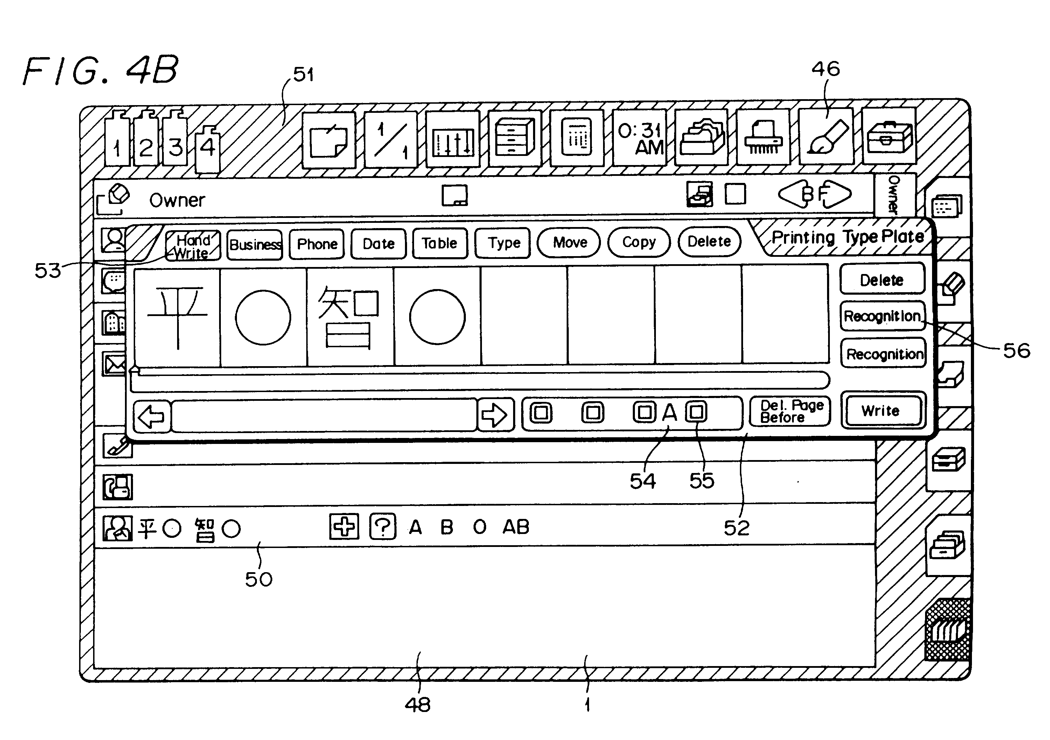

Following the start of operation, in first step S1 the power switch 10 is turned ON first, and then the icon groups 40 are displayed on the upper portion and right portion of the display section 1 as shown in Figure 4A. When the other icon 47 described as [others] which is located on the lowermost portion of the icon group 40 on the right side of the display section 1 is touched with the point of the pen 3 and an owner page is opened, then an owner page picture 48 is displayed on the display portion 1 as shown in Figure 4A. On the owner page, in addition to a column 49 in which the owner's name, the owner's address, the telephone number of the owner's home, the address of the owner's company, the telephone number of the owner's company and so on are written, an owner's name column 50 in which the owner's name such as 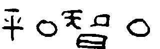 , sign or pen name are written is provided. In this owner column, A, B, 0 and AB denote blood types and ? denotes an unknown blood type. If the owner touches own blood type, the owner's blood type is registered. In second step S2, if the printing type icon 51 described as [printing type] of the icon group 40 is touched with the point of the pen 3 and the pen 3 is moved up the centre of the picture screen of the display section 1 without lifting the pen 3 from the picture screen of the display section 1, then the printing type icon 51 is enlarged and the printing type plate 52 is obtained as shown in Figure 4B. This printing type plate 52 is displayed in a superimposed fashion on the owner picture 48, and the printing type plate 52 is displayed at the position in which the point of the pen 3 is lifted off from the picture screen. In the printing type plate 52, a hand-writing key is placed in an active state as shown by a hatched portion in Figure 4B. If the name, for example, 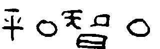 is written on a box-shaped portion 54 of the printing type plate 52 with the pen 3, a kanji key 55 is touched with the point of the pen 3 and a recognition key 56 is touched with the point of the pen 3, then the CPU 21 recognises the hand-written characters and converts the recognised characters into predetermined printing type kanji characters, which are then displayed on the box-shaped portion 54. Thus, the registration of the owner's name in the owner name column 50 is finished.

While in the second step S2, the printing type plate 52 is opened and the owner signs his name, the figure plate 46 written as [figure] may be opened and the owner may sign his name on this figure plate 46.

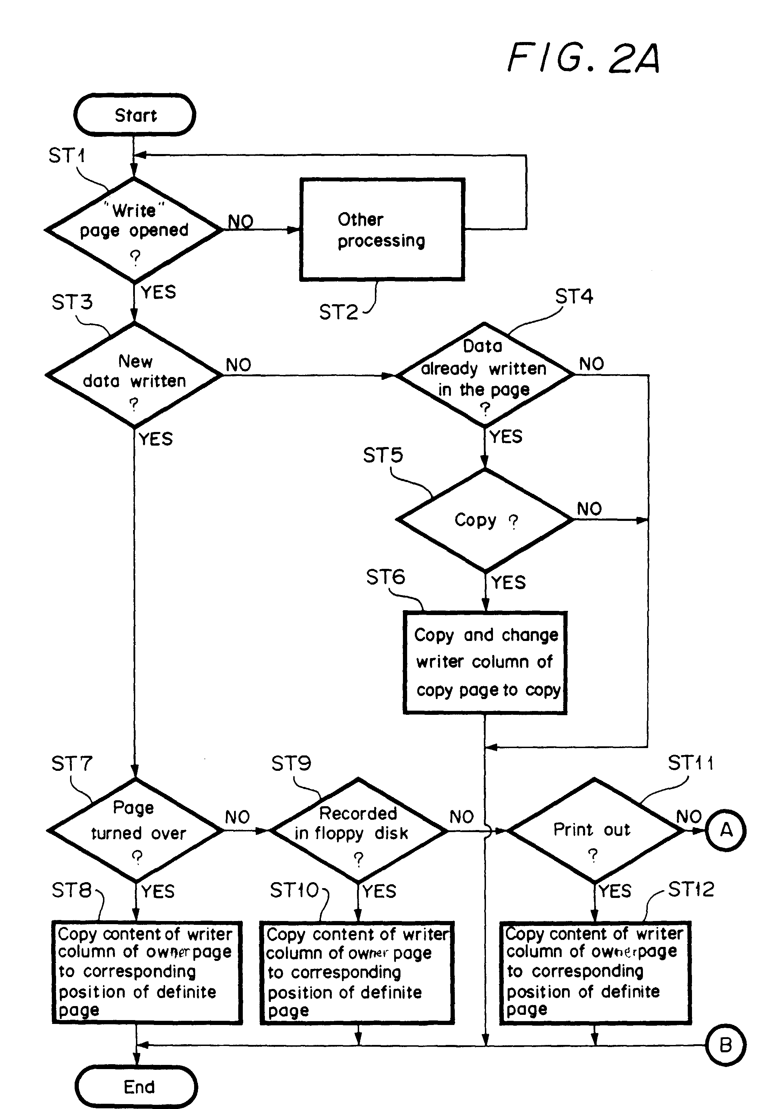

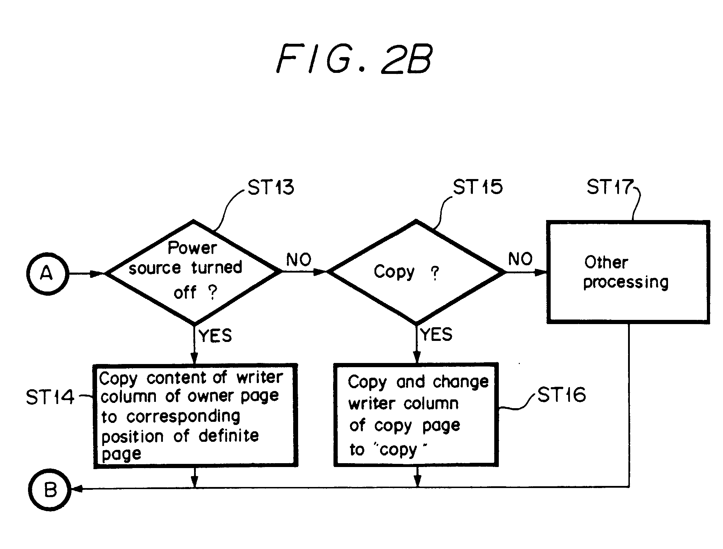

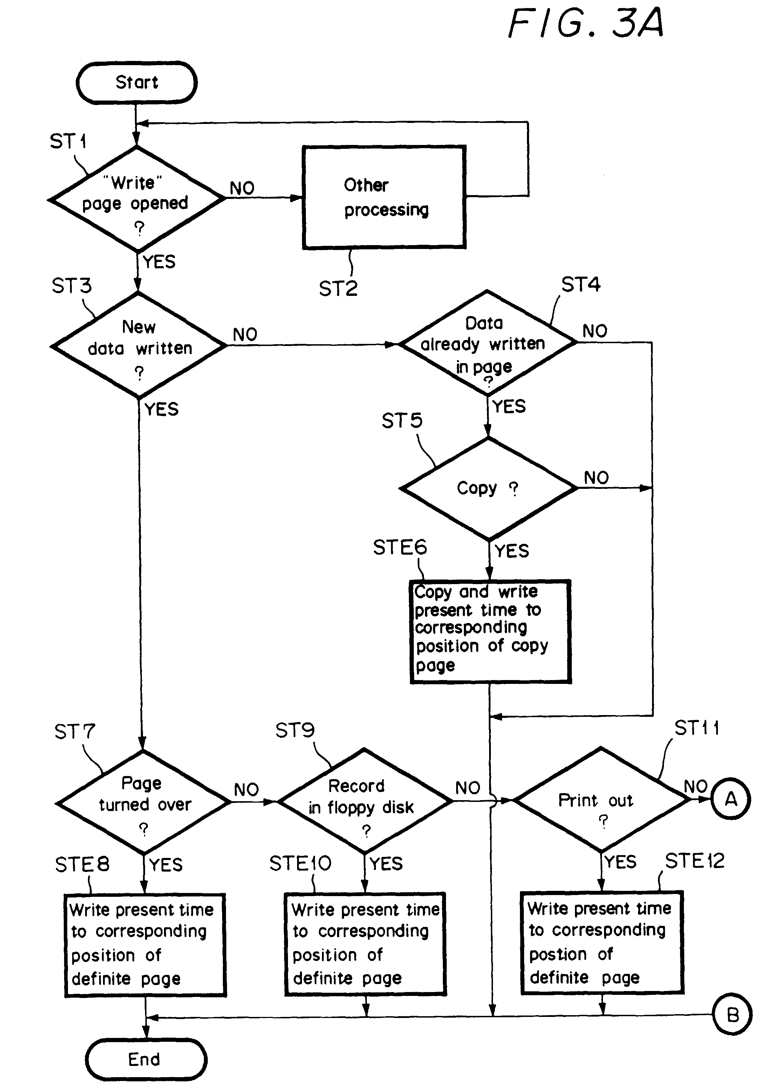

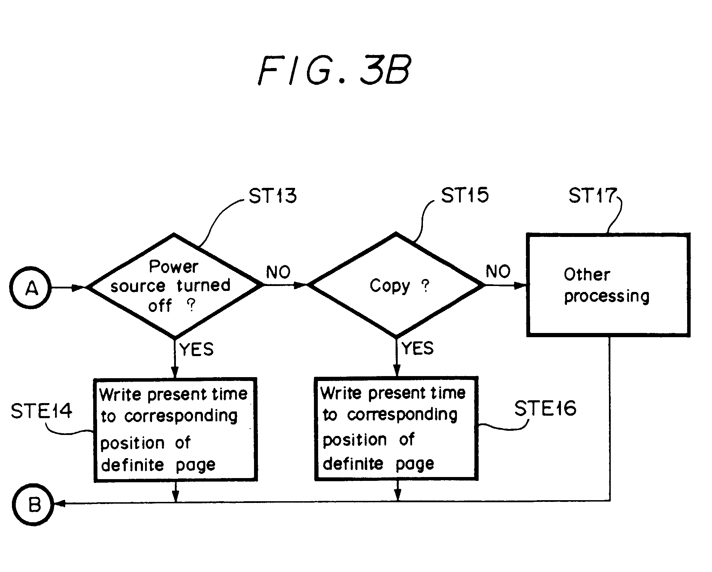

If registration of the owner's name, the sign or pen name or the like on the owner's name column 50 is finished, then the CPU 21 writes the signed owner name and the registration time on the end portion of each card data in accordance with the flowcharts of Figures 2 and 3.

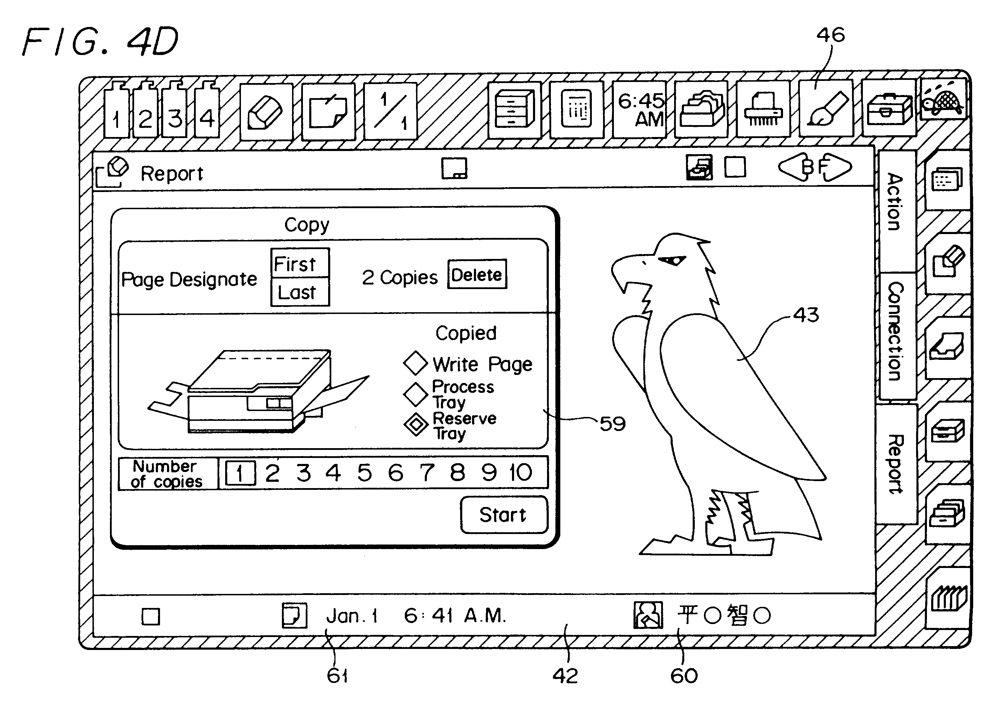

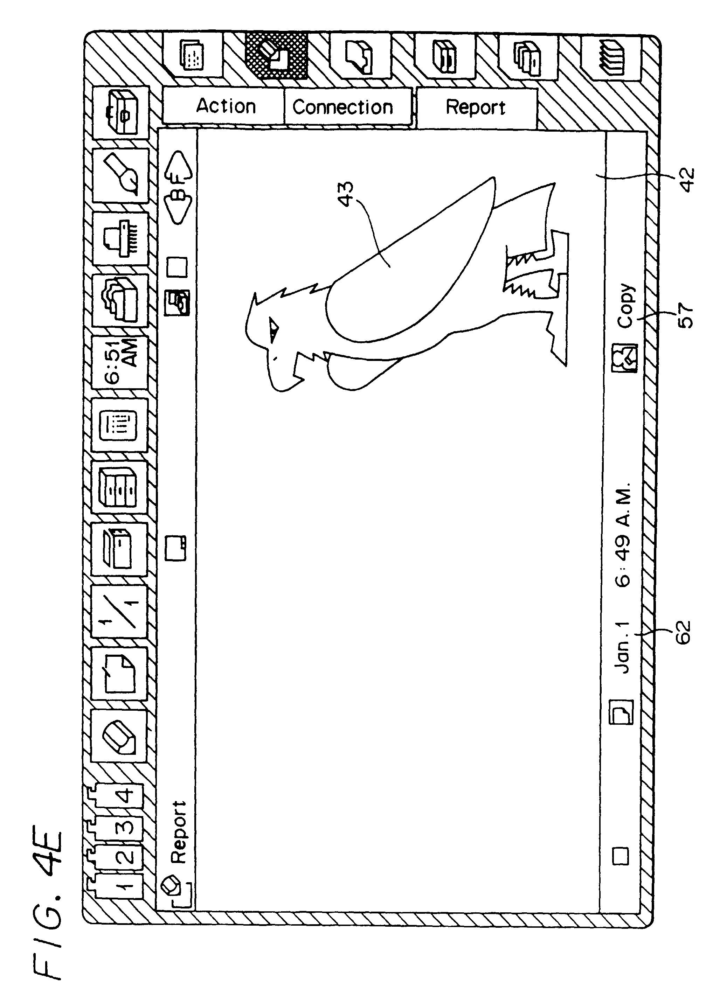

An operation in which the owner's name is written in each card data will be explained with reference to Figures 2, 4C, 4D and 4E.

Referring to Figure 2, following the Start of operation, it is determined in first step ST1 whether or not a write page is opened by touching the write icon 44 with the point of the pen 3. If the write page is not opened as represented by a NO at step ST1, then other processing is performed at second step ST2 and the processing returns to the first step ST1. If the write page is opened as represented by a YES at step ST1, then the processing proceeds to third decision step ST3. In third step ST3, it is determined whether or not the figure icon 46 described as [figure] is touched with the point of the pen 3, and the figure plate is reproduced on the report picture 42 of, for example, the display section 1 or the write icon 45 described as [printing type] is touched with the point of the pen 3 and the printing type plate is reproduced on the report picture 42 of, for example, the display section 1, and a new figure of a new character is written in the figure plate or in the printing type plate. If a NO is output at step ST3, then the processing proceeds to the fourth decision step ST4. In decision step ST4, it is determined whether or not any data are already written, for example, in the opened report page (action page and connection page are possible). If no data are written on the opened report page as represented by a NO at step ST4, the opened report page is a blank page and the processing proceeds to the end. If the opened report page or card is a page in which something is already written, this card is sent to the fifth decision step ST5. It is determined in step ST5 whether or not this card is copied. If a NO is output at step ST5, the processing proceeds to the end, whereas if a YES is output at step ST5, then the processing proceeds to fifth step ST6. In step ST6, when the copy is performed, a copy icon 58 (see Figure 4C) is used and the copy processing is carried out by a copy plate 59 shown in Figure 4D. In this copy plate 59, the copy is performed by designating the number of copies, a page designating key and a copy starting key.

While there is a possibility that a plurality of copies may be required, in these copies, the owner's name, sign and pen name (referred to later) written in the owner's name column are rewritten as [copy] 57. Figure 4E shows the report picture in the abovementioned condition. That is, in the case of the copy, the owner's name is not the writer name and the writer name becomes the [copy] 57. If a YES is output at step ST3 in which new data are written in the figure plate or in the printing type plate, then the processing proceeds to the next decision step ST7.

It is determined at decision step ST7 whether or not the page is turned over. If the page is turned over as represented by a YES at step ST7, then the processing proceeds to step ST8, whereat the content of writer column (owner's name column) is copied to the corresponding position of the determined page, and then the processing proceeds to the end. If a NO is output at decision step ST7, then the processing proceeds to the next decision step ST9, whereat it is determined whether or not the data are recorded on a floppy disc. If a YES in which data are recorded on the floppy disc is output at step ST9, then the processing proceeds to step ST10 in which the name in the owner's name column is copied similarly to step ST8. In that case, step ST9 is not limited to the floppy disc and may be applied to the case that data are recorded on a magnetic medium such as a magnetic tape or a hard disc or a recordable, a rewritable optical disc and so on.

At the completion of step ST10, then the processing proceeds to the end. If a NO is output at step ST9, then the processing proceeds to the next decision step ST11. It is determined in step ST11 whether or not the card, which is turned over, is printed out. If the card is printed out as represented by a YES at step ST11, then the owner's name is copied similarly to step ST8 and the processing proceeds to the end. If a NO is output at step ST11, then the processing proceeds to the next decision step ST13. It is determined in step ST13 whether or not the power source is turned OFF. If the power source is turned OFF as represented by a YES at step ST13, then the processing proceeds to step ST14, whereat the owner's name is copied similarly to the step ST8. Then, the processing proceeds to the end. Under the condition that the steps ST8, ST10, ST12 and ST14 are finished, as shown in Figures 4C and 4D, the name 60 signed on the end portion of each card data is displayed.

If a NO is output at step ST13, then the processing proceeds to the next decision step ST15, whereat it is determined whether or not the name is copied. If a YES is output at step ST15, then the processing proceeds to step ST16. In step ST16, the copy is performed similarly to step ST6, and the writer column of the copied page is changed to [copy] 57 as shown in Figure 4E. That is, in step ST16, since it is the copy of the writer who describes the data in the card, the signature of the owner's name is removed. While the flowchart in steps ST4 to ST6 illustrates the case such that the owner's name signed on the card data in which something is already written is changed to [copy], step ST16 shows the case that the signature of the writer who writes data immediately after new data are written in the card is changed to [copy] and [copy] is determined. Similarly, steps ST7, ST9, ST11 and ST13 illustrate the case that the signature of the writer who writes data immediately after new data are written in the card is changed to [copy] and [copy] is determined. If a NO is output at step ST15, other processing than the aforementioned processing is carried out at step ST17, and then the processing proceeds to the end.

As described above, in this embodiment, when the card data are turned over, printed out and recorded on the record medium or when the power source is turned OFF, the name of the writer who writes the card data is displayed so that the writer can be known immediately. Further, in the copied card data, the name of the writer who writes the card data is erased and changed into [copy]. Thus, it can be determined immediately whether the card data are the true card data or the copied card data.

Figure 3 is a flowchart to which references will be made in explaining an operation in which a time is recorded when data are recorded on a record medium such as a floppy disc, when data is printed out, when the power switch is turned OFF and when data of the determined page are copied. In Figure 3, parts corresponding to those of Figure 2 are marked with the same references.

In Figure 3, steps STE6, STE8, STE10, STE12, STE14 and STE16 correspond to steps ST6, ST8, ST10, ST12, ST14 and ST16 in Figure 2. In steps STE8, STE10, STE12 and STE14, the present time from the timer 27 is written in the determined page at its corresponding recording position. Figures 4C and 4D show card data in which a time 61 of the determined page is written. In steps STE6 and STE16, the determined page is copied and the present time from the timer 27 is written in the copied page at its corresponding recording position. Figure 4E shows the condition such that a current time 62 at which the determined page is copied is written in each card data.

With this arrangement, even when the user receives card data (page data) by means of electronic mail, a FAX communication, IC card and so on, and mixes the received card data with the owner's card data, it is possible for the user to know clearly when and from whom the card data have been sent, that is, who sent the card data and the time at which data are transmitted.

While the copy of the owner's signature and the writing of time are independently performed in the aforementioned embodiment, as shown in Figures 4C, 4D and 4E, the above operations may be performed at the same time.

Furthermore, the input of data is not limited to the pen 3 and data may be input to the apparatus by utilising a keyboard and so on.

As set out above, if any data are written in card data when the user opens the check page and the write page, the signature, sign, pen name or the like of the writer who writes the data is recorded, and the date and time when card data are determined are also recorded, thus making it possible for the user to know clearly the writer's name and time and date of the recording. It is also possible for the user to know the time when card data are copied.

## Claims

1. An information processing apparatus comprising:
data input means (2, 3, 31) comprising a tablet (2) for inputting information by a user;
memory means (24, 25) for storing said information input by said data input means (2, 3);
processing means (21, 23) for processing said information in the form of a plurality of pages; and
displaying means (1, 29, 30) for displaying said information page by page;
means (S1, S2) for registering image data representative of the name of the owner of information input by said data input means (2, 3), the registration of the said name image data being executed on an individual registration area on one of said pages;
characterised by:
means (ST1-ST7, ST9, ST11, ST13) for judging whether or not a predetermined process has been performed on one or more others of said pages; and
means responsive to the judging means (ST8, ST10, ST12, ST14) for storing said name image data at a predetermined position of the or each other of said pages when a said predetermined process has been performed on that page, wherein when that said page is displayed, said name image data (60) are
displayed with said information at the said predetermined position of that page.

2. Apparatus according to claim 1, wherein said name image data are a typed character derived from a hand-written letter (53) by character recognition (56).

3. Apparatus according to claim 2, wherein said name image data are a trace image of a signature input by a user.

4. Apparatus according to claim 1, 2 or 3, wherein said image data are stored (ST8) when said selected one of said pages has a renewal information and when said one of said pages has undergone said predetermined process (ST3).

5. Apparatus according to claim 1, 2 or 3, wherein said predetermined process is a defining process (ST7, ST9, ST11, ST13) for storing input information on a page.

6. Apparatus according to claim 5, wherein said defining process is executed when said information processing apparatus is changed from the page input renewal information displaying condition (ST3) to the other page displaying condition (ST7).

7. Apparatus according to claim 5, wherein said defining process is executed when said information processing apparatus transmits (ST9) the data of page input renewal information (ST3) to a recording device connected thereto as a peripheral apparatus.

8. Apparatus according to claim 5 wherein said defining process is executed when said information processing apparatus is turned off (ST13), when page input renewal information (ST3) is displayed.

9. Apparatus according to any preceding claim, further comprising clock means (27) for counting time and generating image data representing time; and wherein the storing means stores said time image data (61) at a further predetermined position of said one of said pages in response to the judging means judging that a predetermined process has been performed on the page, and wherein when said one of said pages is displayed, said stored time image data are displayed with said information at the said further position.

10. Apparatus according to any one of claims 1 to 9 comprising
means for generating image data (57) representing copying; and wherein the judging means (ST5, ST15) judges whether or not information on a page has been copied; and
the storing means (ST6, ST16) stores said image data representing copying at another predetermined position of a said page produced by said copying process, and wherein when said page made by said copying process is displayed, said stored image data representing copying are displayed with said copied information at the said another position (57).

## Patentansprüche

1. Informationsverarbeitungsvorrichtung mit einer Dateneingabeeinrichtung (2,3,31), umfassend ein Tablett (2) für eine Informationseingabe durch einen Benutzer,
mit einer Speichereinrichtung (24,25) zur Speicherung der durch die genannte Dateneingabeeinrichtung (2,3) eingegebenen Information,
mit einer Verarbeitungseinrichtung (21,23) zur Verarbeitung der genannten Information in Form einer Vielzahl von Seiten, mit einer Anzeigeeinrichtung (1,29,30) für eine seitenweise Anzeige der genannten Information
und mit einer Einrichtung (S1, S2) zur Registrierung von Bilddaten, die kennzeichnend sind für den Namen des Besitzers der durch die genannte Dateneingabeeinrichtung (2,3) eingegebenen Information, wobei die Registrierung der genannten Namen-Bilddaten in einem individuellen Registrierungsbereich auf einer genannten Seiten ausgeführt wird,
**gekennzeichnet durch**
Einrichtungen (ST1-ST7, ST9, ST11, ST13) für eine Entscheidung, ob ein bestimmter Prozeß auf einer oder mehreren Seiten der genannten Seiten ausgeführt worden ist oder nicht, und durch Einrichtungen, die auf die Entscheidungseinrichtungen (ST8, ST10, ST12, ST14) hin die genannten Namen-Bilddaten an einer bestimmten Position der oder jeder anderen Seite der genannten Seiten in dem Fall speichern, daß der genannte bestimmte Prozeß auf der betreffenden Seite ausgeführt worden ist, wobei in dem Fall, daß die betreffende genannte Seite angezeigt wird, die genannten Namen-Bilddaten (60) mit der genannten Information an der genannten bestimmten Position der betreffenden Seite angezeigt werden.

2. Vorrichtung nach Anspruch 1, wobei die genannten Namen-Bilddaten ein gedrucktes Schriftzeichen sind, welches mittels Zeichenerkennung (56) von einem handgeschriebenen Schreiben (53) gewonnen ist.

3. Vorrichtung nach Anspruch 2, wobei die genannten Namen-Bilddaten ein Linienzugbild einer durch einen Benutzer eingegebenen Unterschrift sind.

4. Vorrichtung nach Anspruch 1, 2 oder 3, wobei die genannten Bilddaten dann gespeichert (ST8) werden, wenn die genannte ausgewählte eine Seite der genannten Seiten eine Erneuerungs-Information aufweist und wenn die genannte eine Seite der betreffenden Seiten dem genannten bestimmten Prozeß (ST3) unterzogen ist.

5. Vorrichtung nach Anspruch 1, 2 oder 3, wobei der genannte bestimmte Prozeß ein Definierungsprozeß (ST7, ST9, ST11, ST13) zur Speicherung einer Eingabeinformation auf einer Seite ist.

6. Vorrichtung nach Anspruch 5, wobei der genannte Definierungsprozeß in dem Fall ausgeführt wird, daß die Informationsverarbeitungsvorrichtung vom Zustand (ST3) der Anzeige der Seiten-Eingabeerneuerungsinformation zum Zustand (ST7) der Anzeige einer anderen Seite wechselt.

7. Vorrichtung nach Anspruch 5, wobei der genannte Definierungsprozeß in dem Fall ausgeführt wird, daß die Informationsverarbeitungsvorrichtung Daten einer Seiten-Eingabeerneuerungsinformation (ST3) zu einer Aufzeichnungseinrichtung überträgt (ST9), die dort als eine periphere Vorrichtung angeschlossen ist.

8. Vorrichtung nach Anspruch 5, wobei der genannte Definierungsprozeß in dem Fall ausgeführt wird, daß die Informationsverarbeitungsvorrichtung ausgeschaltet (ST13) ist, wenn eine Seiten-Eingabeerneuerungsinformation (ST3) angezeigt ist.

9. Vorrichtung nach irgendeinem vorhergehenden Anspruch, umfassend ferner eine Uhreinrichtung (27) zum Zählen der Zeit und zur Erzeugung einer Bilddaten-Darstellungszeit,
wobei die Speichereinrichtung die Zeit-Bilddaten (61) an einer weiteren bestimmten Position der genannten einen Seite der Seiten in Abhängigkeit davon speichert, daß die Entscheidungseinrichtung entscheidet, daß ein bestimmter Prozeß auf der Seite ausgeführt worden ist,
und wobei in dem Fall, daß die genannte eine Seite der betreffenden Seiten angezeigt wird, die betreffenden gespeicherten Zeit-Bilddaten mit der genannten Information an der genannten weiteren Position angezeigt werden.

10. Vorrichtung nach irgendeinem der Ansprüche 1 bis 9, umfassend Einrichtungen zur Erzeugung von Bilddaten (57), die eine Kopie wiedergeben,
wobei die Entscheidungseinrichtung (ST5, ST15) entscheidet, ob eine Information auf eine Seite kopiert worden ist oder nicht,
wobei die Speichereinrichtung (ST6, ST16) die eine Kopie wiedergebenden genannten Bilddaten an einer weiteren bestimmten Position der durch den genannten Kopierprozeß erzeugten Seite speichert,
und wobei in dem Fall, daß die durch den genannten Kopierprozeß erstellte genannte Seite angezeigt wird, die die Kopie wiedergebenden gespeicherten Bilddaten mit der genannten kopierten Information an der betreffenden weiteren Position (57) angezeigt werden.

## Revendications

1. Appareil de traitement d'informations comprenant :
un moyen d'entrée de données (2, 3, 31) comprenant une tablette (2) pour introduire des informations par un utilisateur ;
un moyen de mémoire (24, 25) pour stocker lesdites informations introduites par ledit moyen d'entrée de données (2, 3) ;
un moyen de traitement (21, 23) pour traiter lesdites informations sous la forme d'une pluralité de pages ; et
un moyen d'affichage (1, 29, 30) pour afficher lesdites informations page par page ;
un moyen (S1, S2) pour enregistrer des données d'image représentatives du nom du propriétaire des informations introduites par ledit moyen d'entrée de données (2, 3), l'enregistrement desdites données d'image de nom étant exécuté sur une zone d'enregistrement individuelle sur une desdites pages ;
caractérisé par :
un moyen (ST1 à ST7, ST9, ST11, ST13) pour tester si oui ou non un traitement prédéterminé a été réalisé sur une ou plusieurs autres desdites pages, et un moyen sensible au moyen de test (ST8, ST10, ST12, ST14) pour stocker lesdites données d'image de nom à une position prédéterminée de la page ou de chaque autre desdites pages lorsqu'un dit traitement prédéterminé a été réalisé sur cette page, où lorsque cette dite page est affichée, lesdites données d'image de nom (60) sont affichées avec lesdites informations sur ladite position prédéterminée de cette page.

2. Appareil selon la revendication 1, dans lequel lesdites données d'image de nom sont un caractère typé dérivé à partir d'une lettre manuscrite (53) par une reconnaissance de caractère (56).

3. Appareil selon la revendication 2, dans lequel lesdites données d'image de nom sont une image de trace d'une signature introduite par un utilisateur.

4. Appareil selon la revendication 1, 2 ou 3, dans lequel lesdites données d'image sont stockées (ST8) lorsque ladite sélectionnée desdites pages a des informations de renouvellement et lorsque une dite desdites pages a subi ledit traitement prédéterminé (ST3).

5. Appareil selon la revendication 1, 2 ou 3, dans lequel ledit traitement prédéterminé est un traitement de définition (ST7, ST9, ST11, ST13) pour stocker des informations d'entrée sur une page.

6. Appareil selon la revendication 5, dans lequel ledit traitement de définition est exécuté lorsque ledit appareil de traitement d'informations est changé à partir des informations de renouvellement d'entrée de page affichant l'état (ST3) à l'autre état d'affichage de page (ST7).

7. Appareil selon la revendication 5, dans lequel ledit traitement de définition est exécuté lorsque ledit appareil de traitement d'informations transmet (ST9) les données d'informations de renouvellement d'entrée de page (ST3) à un dispositif d'enregistrement raccordé à celui-ci comme un appareil périphérique.

8. Appareil selon la revendication 5, dans lequel ledit traitement de définition est exécuté lorsque ledit appareil de traitement d'informations est mis hors service (ST13), lorsque les informations de renouvellement d'entrée de page (ST3) sont affichées.

9. Appareil selon l'une quelconque des revendications précédentes, comprenant en outre un moyen d'horloge (27) pour mesurer le temps et générer des données d'image représentant la date et l'heure, et où le moyen de stockage stocke lesdites données d'image de date et d'heure (61) à une autre position prédéterminée de ladite une desdites pages en réponse au moyen de test testant qu'un traitement prédéterminé a été réalisé sur la page, et où lorsque ladite une desdites pages est affichée, lesdites données d'image de date et d'heure stockées sont affichées avec lesdites informations à ladite autre position.

10. Appareil selon l'une quelconque des revendications 1 à 9 comprenant un moyen pour générer des données d'image (57) représentant le copiage ; et où le moyen de test (ST5, ST15) teste si oui ou non des informations sur une page ont été copiées ; et
le moyen de stockage (ST6, ST16) stocke lesdites données d'image représentant le copiage sur une autre position prédéterminée de ladite page produite par ledit traitement de copiage, et où lorsque ladite page faite par ledit traitement de copiage est affichée, lesdites données d'image stockées représentant le copiage sont affichées avec lesdites informations copiées sur ladite autre position (57).
